# EUROPÄISCHE PATENTSCHRIFT

(11) **EP 1 270 214 B1**
(45) Veröffentlichungstag und Bekanntmachung des Hinweises auf die Patenterteilung: **06.09.2006**
(21) Anmeldenummer: 02006034.9
(22) Anmeldetag: 16.03.2002
(51) Int. Cl.: B32B 37/04, B32B 37/15, B32B 15/08

(54) **Verfahren zur Beschichtung der Oberfläche eines Metallbandes mit einem Kunststofffilm**
Method for coating the surface of a metallic band with a plastic film
Procédé pour revêtir la surface d'une bande métallique avec un film plastique

(30) Priorität: 25.06.2001 DE 10130005
(43) Veröffentlichungstag der Anmeldung: 02.01.2003
(73) Patentinhaber: Rasselstein GmbH, 56626 Andernach (DE)
(72) Erfinder: Höhn, Winfried, 56237 Nauort (DE); Garth, Günter, 58513 Lüdenscheid (DE)
(74) Vertreter: Rapp, Bertram

(56) Entgegenhaltungen:
- EP-A- 0 312 304
- EP-A- 0 312 309
- EP-A- 0 664 209
- EP-A- 1 086 808
- DE-C- 19 730 893

## Beschreibung

Die Erfindung betrifft ein Verfahren nach dem Oberbegriff von Anspruch 1.

Aus dem Stand der Technik sind Verfahren zur Laminierung der Oberfläche eines Metallbandes mit einer Kunststoffolie bekannt, wobei eine zunächst kristalline oder semi-kristalline Kunststoffolie unter Druck auf eine oder beide Hauptflächen des Metallbandes derart auflaminiert wird, daß die Außenfläche der Folie unterhalb ihres Schmelzpunktes verbleibt und das so gebildete Ausgangslaminat auf eine Temperatur oberhalb des Schmelzpunktes des Kunststoffs über einen vorgegebenen Zeitraum erhitzt und anschließend rasch auf eine Temperatur unterhalb des Glasübergangspunktes des Kunststoffs abgekühlt wird. Ein derartiges Verfahren ist beispielsweise in der europäischen Patentanmeldung EP 0 312 304 A1 beschrieben.

Durch das Aufheizen des Laminats auf eine Temperatur oberhalb des Kunststoff-Schmelzpunktes und das rasche Abkühlen auf eine Temperatur unterhalb des Glasübergangspunktes wird erreicht, daß die ursprünglich kristalline oder semi-kristalline Kunststoffschicht amorphisiert wird. Es ist bekannt, daß Metallbänder, welche mit einem Kunststoffilm beschichtet sind hinsichtlich ihrer Umformbarkeit und Beständigkeit bessere Eigenschaften aufweisen, wenn die Kunststoffschicht amorphe Struktur aufweist. Beispielsweise kommt es bei der Herstellung von Metall-Hohlkörpern aus kunststoffbeschichtetem Blech bei der Umformung zum sog. Weißbruch, wenn die Beschichtung kristalline oder semi-kristalline Struktur besitzt. Es ist weiterhin bekannt, daß amorphe Kunststoffschichten verglichen mit kristallinen Schichten eine bessere Haftung auf dem Metallsubstrat aufweisen. Bei der Kunststoffbeschichtung von Metallbändern, welche anschließend mittels Umform- und Tiefzieh-Verfahren weiter verarbeitet werden, wird deshalb regelmäßig eine amorphe Kunststoffschicht auf dem Metallsubstrat angestrebt.

Wie in der EP 0 312 304 A1 näher beschrieben, wird die amorphe Struktur der Kunststoffschicht auf dem Metallband durch erhitzen des Laminats auf eine Temperatur oberhalb der Schmelztemperatur und anschließendes Abschrecken auf eine Temperatur unterhalb der Glasübergangstemperatur erzielt.

Aus dem Stand der Technik sind ferner Verfahren zum Aufbringen einer Kunststoffschicht auf ein Metallband mittels Direkt-Extrusion bekannt. Hierbei wird auf ein bewegtes Metallband mittels einer Breitschlitzdüse ein Film aus geschmolzenem Kunststoff unmittelbar auf die Oberfläche des Metallbandes aufgebracht. Der noch flüssige Kunststoffilm wird anschließend an das Metallband angedrückt, indem es durch einen Spalt zwischen zwei Rollen hindurch geführt wird, wobei die am Kunststoffilm anliegende Rolle unter der Schmelztemperatur des Kunststoffes gehalten wird. Auf diese Weise wird erreicht, daß sich die Kunststoffschicht auf eine Temperatur unterhalb des Schmelzpunktes abkühlt und somit erstarrt.

Bei dem in der deutschen Patentschrift DE 197 30 893 C1 beschriebenen Verfahren zur Kunststoffbeschichtung von Metallband mittels Direkt-Extrusion wird das noch unbeschichtete Metallband im Auftragsbereich des flüssigen Kunststoffilmes auf eine Temperatur oberhalb des Schmelzpunktes erhitzt. Auf das heiße Metallband wird dann mittels einer Breitschlitzdüse ein Film aus geschmolzenem Kunststoff unmittelbar auf die Oberfläche des bewegten Metallbandes aufgebracht und das so gebildete Laminat wird durch einen Spalt zwischen zwei Rollen hindurch geführt, wobei die am Kunststoffilm anliegende Rolle (Laminatorrolle) auf einer Temperatur unterhalb der Schmelztemperatur des Kunststoffes gehalten wird und zwischen dem Kunststoffilm und der Laminatorrolle Flächenkontakt herbeigeführt wird, welcher durch synchrone Weiterbewegung der sich kontaktierenden Oberflächen von Kunststoffilm und Laminatorrolle über eine vorgegebene Kontaktzeit aufrechtechterhalten wird, die ausreicht um bei einer vorgegebenen Bandgeschwindigkeit zumindest die Oberflächenschicht des Kunststoffilms auf eine Temperatur unterhalb des Schmelzpunktes abzukühlen, bevor der Kontakt zwischen Kunststoffilm und Laminatorrolle gelöst wird.

Bei allen bekannten Verfahren zur Kunststoffbeschichtung von Metallband wird der gewünschte Zustand einer amorphen Kunststoffschicht dadurch erzielt, daß das beschichtete Metallband in einem abschließenden Verfahrensschritt auf eine Temperatur im Bereich des Schmelzpunktes des Kunststoffes oder darüber erhitzt und anschließend rasch auf eine Temperatur unterhalb des Glasübergangspunktes abgeschreckt wird. Die Nacherhitzung des beschichteten Metallbandes erfolgt bevorzugt auf indirektem Wege, beispielsweise mittels einer Induktionsheizung oder durch Infrarot-Bestrahlung, um eine Beschädigung der aufgebrachten Kunststoffschicht zu vermeiden. Die hierzu erforderlichen Heizvorrichtungen sind sehr teuer. Außerdem führt die Nacherhitzung zu einer Verlängerung der Verfahrensdauer.

In der EP 1 086 808 A2 ist ein Verfahren zur Beschichtung der Oberfläche eines Metallbandes mit einem Kunststofffilm beschrieben, in dem der Kunststofffilm auf das Metallband auflaminiert wird, wobei die Temperatur des Metallbandes nach dem Durchlaufen der Laminatorrollen oberhalb des Schmelzpunktes des Kunststofffilmes liegt. Hierdurch wird während des Laminiervorgangs der Kunststofffilm im Wesentlichen vollständig aufgeschmolzen, wodurch die kristalline Struktur des Kunststofffilms zerstört wird.

Aus der EP 0 664 209 A1 ist ein Verfahren nach dem Oberbegriff des Anspruchs 1 bekannt. Bei dem in der EP 0 664 209 A1 beschriebenen Verfahren wird auf der einen Seite eines Metallbandes ein Kunststofffilm aus einem Polyesterharz und auf der anderen Seite ein Kunststofffilm aus einem Polyolephin-Harz auflaminiert. Um zu erreichen, dass der Kunststofffilm aus Polyesterharz einen guten Kontakt mit der Metallbandoberfläche erhält und um gleichzeitig zu verhindern, dass der Polyolephin-Film auf der anderen Seite des Metallbandes vollständig aufschmilzt und an den Laminatorrollen kleben bleibt wird während des Laminierens die Temperatur des Metallbandes in einem Temperaturbereich gehalten, der zwischen der Schmelztemperatur des Polyesterharzes und 30° C darüber liegt. Nach dem Laminieren wird das Laminat auf eine Temperatur unterhalb der Glasübergangstemperatur de Polyesterharzes abgeschreckt.

Der Erfindung liegt die Aufgabe zugrunde, ein Verfahren zur Kunststoffbeschichtung von Metallband bereitzustellen, welches bei gleich bleibender Qualität des Endproduktes hinsichtlich Haftung der Kunststoffbeschichtung am Metallband, Beständigkeit gegen Brüche beim Umformen und der Oberflächenbeschaffenheit der Kunststoffbeschichtung billiger und schneller arbeitet als die bekannten Verfahren.

Diese Aufgabe wird mit einem Verfahren mit den kennzeichnenden Merkmalen von Anspruch 1 gelöst. Vorteilhafte Ausführungsbeispiele des Verfahrens sind in den Unteransprüchen gekennzeichnet. Anspruch 14 betrifft die Verwendung eines erfindungsgemäß hergestellten Laminats aus Metallband und Kunststofffilm.

Die Erfindung wird im Folgenden anhand vorteilhafter Ausführungsbeispiele näher beschrieben.

In einem ersten Ausführungsbeispiel der Erfindung wird eine Kunststofffolie auf eine oder beide Hauptoberflächen eines Metallbandes auflaminiert. Bei der Kunststofffolie kann es sich um eine Folie aus PET (Polyethylenterephtalat), PBT (Polybutylenterephtalat) oder PP (Polypropylen) handeln. Es kann sich auch um mehrschichtige Folienstrukturen handeln, wie sie beispielsweise in der EP 0 312 304 A1 beschrieben sind. Das Metallband ist vorzugsweise ein Stahlband, welches auch oberflächenbehandelt sein kann, beispielsweise durch Verzinnung, Verchromung oder Konversionsbeschichtung. Das erfindungsgemäße Verfahren ist jedoch auch zur Kunststoffbeschichtung anderer Metallbänder anwendbar, beispielsweise zur Beschichtung von Aluminiumband. Das Metallband weist regelmäßig eine Dicke von 0,05 - 0,5 mm auf. Die Schichtdicken des aufgetragenen Kunststofffilms betragen regelmäßig zwischen wenigen und einigen Hundert µm.
Nachfolgend wird die beidseitige Beschichtung von Weißblech mit einer PET-Folie unter Bezugnahme auf die begleitenden Zeichnungen näher beschrieben. Die Zeichnungen zeigen in
- **Figur 1:**: Schematische Darstellung einer Vorrichtung zur beidseitigen Laminierung der Oberflächen eines Metallbandes mit einer Kunststofffolie;
- **Figur 2:**: Detailansicht einer Vorrichtung gemäß Figur 1 im Bereich der Laminatorrollen, wobei die Folien über eine vorgegebene Zeitdauer (Preßzeit) durch die Laminatorrollen auf die Metallband-Oberflächen gepreßt werden;
- **Figur 3:**: Detailansicht gemäß Figur 2, wobei die Preßzeit gegenüber Figur 2 verkürzt ist;
- **Figur 4:**: schematische Darstellung der Temperaturverläufe der Folien- und Metallbandtemperatur während und nach Ablauf der Preßzeit, bei verschiedenen Verfahrensparametern;

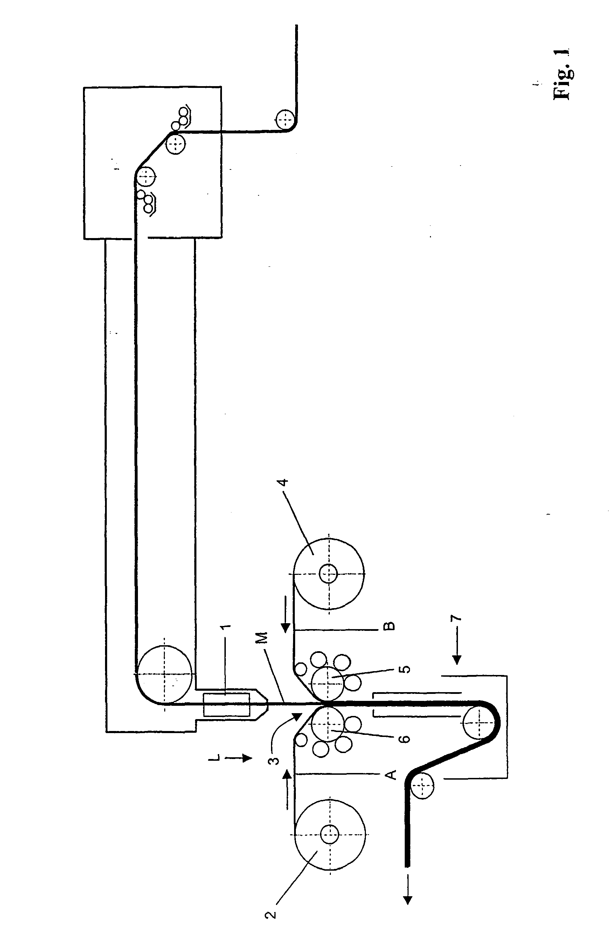

Wie aus der schematischen Darstellung von Figur 1 ersichtlich, umfaßt die Laminiervorrichtung eine Erhitzungseinrichtung 1, durch welche das noch unbeschichtete Metallband M hindurch geführt wird. In der Erhitzungseinreichtung 1 wird das Metallband auf eine Temperatur oberhalb der Schmelztemperatur der aufzulaminierenden Kunststoffolie erhitzt. Bei einer PET-Folie beträgt die Schmelztemperatur beispielsweise 260°C. Bei der Erhitzungseinrichtung 1 kann es sich um einen Induktionsofen oder um eine Infrarot-Strahlungsquelle handeln. Alternativ kann das Metallband M auch durch Kontakt mit heißen Rollen oder mittels Heißluft erhitzt werden.

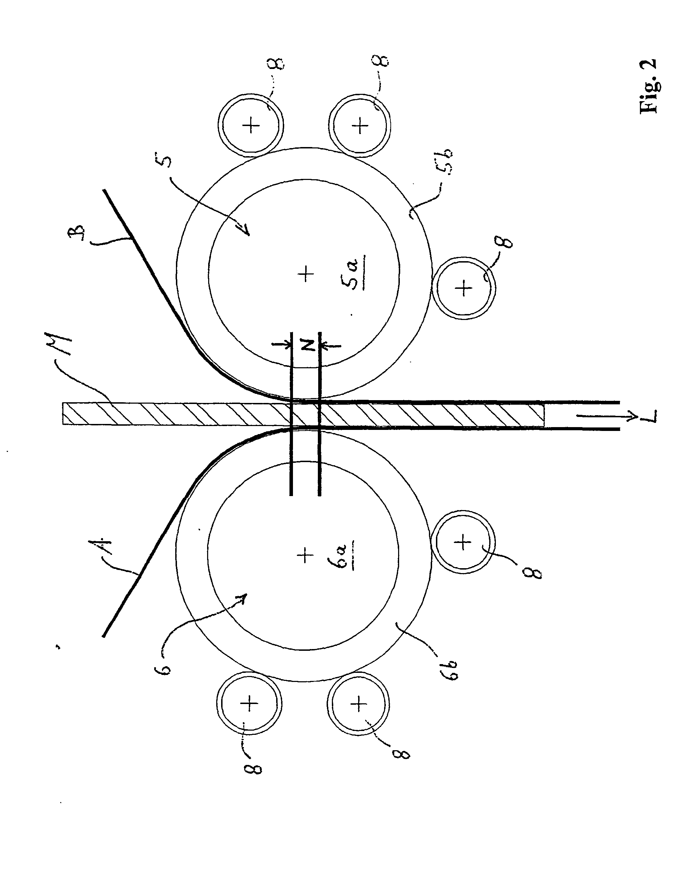

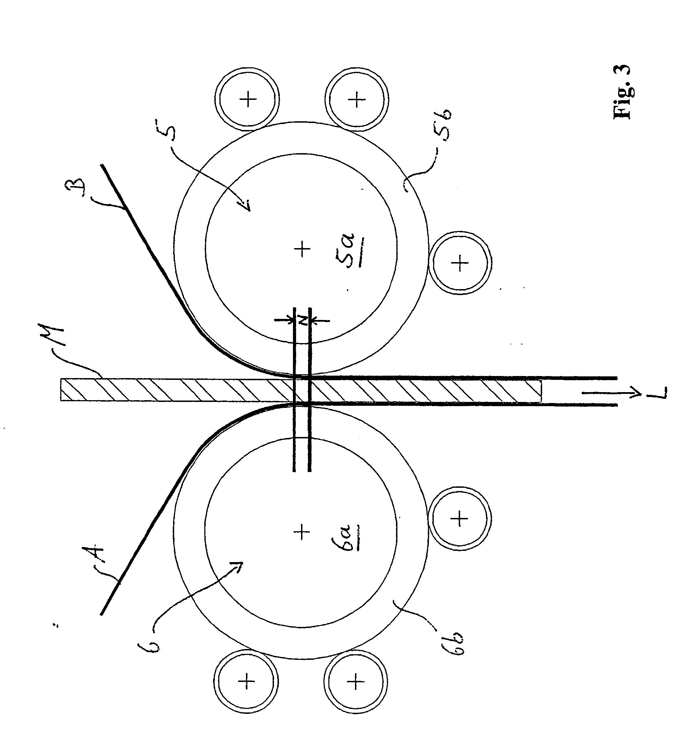

Zwei Kunststoffolien A, B, beispielsweise PET-Folien werden von Vorratsrollen 2 und 4 abgezogen und im Laminierspalt 3 auf die Hauptoberflächen des Metallbandes M auflaminiert. Der Laminierspalt 3 ist gebildet durch die Oberflächen zweier aneinandergedrückter Laminatorrollen 5 und 6. Im Laminatorspalt 3 werden die Kunststoffolien A und B auf die beiden Hauptoberflächen des durchlaufenden Metallbandes gepreßt. Jede Rolle 5, 6 weist einen Metallkern 5a, 6a sowie eine äußere Gummischicht 5b, 6b auf (siehe Figur 2 und 3). Jede Laminatorrolle 5, 6 steht in Kontakt mit einer Vielzahl von Kühlrollen 8, welche auf konstanter Temperatur, vorzugsweise zwischen 20°C und 180 °C gehalten werden. Dadurch werden die die Laminatorrollen 5 und 6 gekühlt.

Die Kühlung der Laminatorrollen 5 und 6 kann auch durch gekühltes Wasser erfolgen, welches das Innere jeder Laminatorrolle 5, 6 durchströmt.

Das Anpressen der Kunststoffolien A und B auf das Metallband M erfolgt mit einem vorbestimmten Anpreßdruck, vorzugsweise von mindestens 60 N/mm bezogen auf die Breite des Stahlbandes und über eine vorbestimmte Zeitdauer. Diese Zeitdauer, welche nachfolgend als Preßzeit bezeichnet ist, bestimmt sich als die Zeit, welche ein ausgewählter Punkt auf der Metallbandoberfläche benötigt, um den Laminierspalt 3 zu durchlaufen, wobei die Länge des Laminierspalts (Niplänge N) in Laufrichtung L des bewegten Metallbands durch die Länge bestimmt ist, über welche die äußeren Oberflächen der Folien A und B mit den Laminatorrollen 5 und 6 in Kontakt stehen (s. Figuren 2 und 3).

Die Preßzeit wird demgemäß bestimmt durch die Geometrie der Laminatorrollen 5 und 6, deren Beschaffenheit, insbesondere der elastischen Eigenschaften und der Dicke der Gummischichten 5b, 6b, der Geschwindigkeit, mit welcher das Metallband M weiterbewegt wird (Bandgeschwindigkeit) und dem Anpreßdruck der Laminatorrollen 5 und 6 auf das Metallband M. Je nach gewähltem Anpreßdruck, Geometrie und Oberflächenbeschaffenheit der Laminatorrollen 5 und 6 platten sich diese an ihrer Ummantelung 5a, 6a leicht ab, wobei der Grad der Abplattung die effektive Niplänge N und damit die Preßzeit mitbestimmt. Somit kann durch Auswahl der Geometrie und Beschaffenheit der Laminatorrollen die Preßzeit beeinflußt werden. Eine Verkürzung der Preßzeit kann insbesondere durch Verwendung von Laminatorrollen mit dünneren bzw. härteren Gummischichten oder unbeschichteten Stahlrollen erzielt werden oder durch den Einsatz von Laminatorrollen 5, 6 mit kleinerem Durchmesser oder durch Erhöhung der Bandgeschwindigkeit oder durch Reduzierung des Anpreßdrucks der Laminatorrollen auf das Metallband M.

Nach Ablauf der Preßzeit wird das beidseitig beschichtete Laminat in Bandlaufrichtung L weiterbewegt und schließlich in eine Abkühlvorrichtung 7 eingeleitet. Bei der Abkühlvorrichtung 7 kann es sich beispielsweise um ein Wasserbad handeln, welches auf Raumtemperatur gehalten ist. Ein geeignetes Verfahren zur Abkühlung des Laminats mit einer bevorzugten Abkühlvorrichtung ist beispielsweise in der europäischen Patentanmeldung EP 0 312 309 A1 beschrieben.

Die Figuren 2 und 3 zeigen die Vorrichtung von Figur 1 im Bereich der Laminatorrollen 5 und 6 in detaillierter Darstellung. Bei der Darstellung nach Figur 3 ist die Preßzeit gegenüber der Darstellung nach Figur 2 verkürzt. Die Preßzeit ist mit der in den Figuren 2 und 3 dargestellten Nipplänge N über die Bandgeschwindigkeit korelliert.

Bei dem erfindungsgemäßen Verfahren wird die Preßzeit so gewählt, daß unmittelbar nach Ablauf der Preßzeit (also wenn das weiterbewegte Laminat aus Metallband und Kunststoffilm den Laminierspalt 3 verläßt) die Temperatur des Metallbandes im Bereich der auflaminierten Kunststoffolie oberhalb der Schmelztemperatur des auflaminierten Kunststoffs ist und gleichzeitig die Temperatur der Kunststoffolie an ihrer dem Metallband zugewandten Oberfläche größer ist als die Schmelztemperatur und an ihrer dem Metallband abgewandten Oberfläche kleiner ist als die Schmelztemperatur.

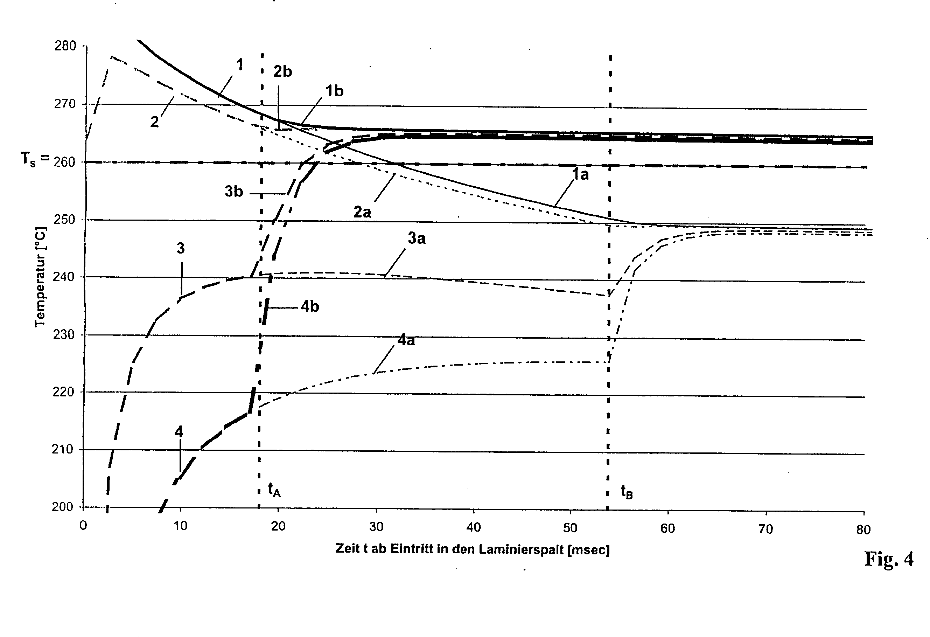

Figur 4 zeigt verschiedene Temperaturverläufe als Funktion der Zeit ab Eintritt des Metallbandes M bzw. der Kunststoffolien A und B in den Laminierspalt 3 (Zeitpunkt t=0), jeweils bei vorgegebener Temperatur des Stahlbandes nach Verlassen der Erhitzungseinrichtung 1. In Figur 4 sind die Temperaturverläufe für zwei verschiedene Preßzeiten, nämlich t_{A}=18 Millisekunden (msec) und t_{B}=54 msec, dargestellt. Die Temperaturen des Stahlbandes sind in Kurve 1 und die Temperaturen der Kunststoffolien A und B sind in den Kurven 2, 3 und 4 dargestellt, wobei Kurve 2 die Temperatur der Folienoberfläche zeigt, welche dem Stahlband M zugewandt ist, Kurve 4 die Temperatur der Folienoberfläche zeigt, welche dem Stahlband M abgewandt ist, und Kurve 3 die Temperatur in der Folienmitte darstellt.

Bei verlängerter Preßzeit, gemäß der Darstellung von Figur 2, ergeben sich für den Verlauf der Temperaturen des Stahlbandes und des Kunststoffilms die in Figur 4 als dünne Linien dargestellten Verläufe (Kurven 1 bis 4 im Bereich t<t_{A} und Kurven 1a, 2a, 3a und 4a im Bereich t>t_{A}). Der in Figur 4 mit t_{B} bezeichnete Zeitpunkt (bei ca. 54 msec) bezeichnet hier den Zeitpunkt, zu dem die Preßzeit beendet ist, also den Zeitpunkt, zu dem das weiterbewegte Laminat den Laminierspalt 3 verläßt.

Wie aus Figur 4 zu sehen, weist das Stahlband beim Eintritt in den Laminierspalt 3 eine Temperatur oberhalb der Schmelztemperatur des Kunststoffs (für PET mit T_{S} = 260°C dargestellt) auf (Figur 4, Kurve 1 für t→0). Während der Preßzeit zwischen t = 0 bis t = t_{B}= 54 msec gibt das Stahlband Wärme an die Umgebung und insbesondere an die angedrückte Kunststoffolien A und B ab. Entsprechend verringert sich die Temperatur des Metallbandes gemäß dem Kurvenverlauf der Kurve 1 bis zum Ablauf der Preßzeit bei t=t_{B} auf eine Temperatur unterhalb des Schmelzpunktes (auf ca. T = 250°C, Figur 4).

Durch die vom Metallband abgegebene Wärme erwärmt sich die Temperatur der Kunststoffolie bei Eintritt in den Laminierspalt 3. Wie der Figur 4 zu entnehmen ist, steigt bei Eintritt in den Laminierspalt 3 die Temperatur der dem Metallband zugewandten Folienoberfläche gemäß Kurve 2 zunächst stark an (bis auf ca. 280°C, Figur 4) und nimmt anschließend exponentiell wieder ab. Die Temperaturabnahme kurz nach Eintritt in den Laminierspalt wird durch die gekühlten Laminatorrollen 5, 6 hervorgerufen, welche während der Preßzeit in Kontakt mit den Folien A und B gehalten werden. Diese werden, wie bereits beschrieben, auf einer Temperatur unterhalb der Schmelztemperatur gehalten, vorzugsweise zwischen 20°C und 180°C. Die Temperaturen in der Mitte der Kunststoffolie sowie an der Folienoberfläche, welche dem Metallband abgewandt ist, steigen nach Eintritt in den Laminierspalt 3 ebenfalls zunächst stark an und gehen dann im Verlauf der Preßzeit in Sättigung bzw. fallen wieder leicht ab (Kurven 4a und 3a im Bereich 0<t<t_{B}, Figur 4). Nach Austritt aus dem Laminierspalt 3 (t>t_{B}, Figur 4) steigt die Temperatur des Kunststoffilms sowohl in der Folienmitte (Kurve 3a) als auch an den jeweiligen Folienoberflächen (Kurven 2a und 4a) an, wobei der Anstieg an der dem Stahlband zugewandten Seite (Kurve 2a) nur gering ist.

Dieser Temperaturanstieg, insbesondere an der der Laminatorrolle zugewandten Seite, ist bedingt durch die außerhalb des Laminierspalts nicht mehr vorhandene Abkühlung durch die gekühlten Laminatorrollen 5, 6. Da jedoch das Metallband M nach Verlassen des Laminierspalts 3, also nach Ablauf der Preßzeit von t_{B} = 54 msec, bereits eine Temperatur unterhalb der Schmelztemperatur des Kunststoffs erreicht hat, kann durch reine Wärmeabgabe vom Metallband keine Erwärmung des Kunststoffilms auf Temperaturen oberhalb der Schmelztemerpatur erfolgen. Der Kunststoffilm ist damit zu diesem Zeitpunkt noch nicht über seine gesamte Dicke auf Temperaturen oberhalb des Schmelzpunktes erwärmt worden, so daß zur Amorphisierung des Kunststoffilms die aus dem Stand der Technik bekannte Wärme-Nachbehandlung erforderlich ist.

Auf diese Wärme-Nachbehandlung kann hingegen verzichtet werden, wenn erfindungsgemäß die Preßzeit soweit verkürzt wird, daß unmittelbar nach Ablauf der Preßzeit die Temperatur des Metallbandes noch oberhalb der Schmelztemperatur des Kunststoffs liegt.

Diese Situation ist in Figur 4 mit einer verkürzten Preßzeit von t_{A} = 18 msec beispielhaft dargestellt. Wie dem Verlauf der Kurve 1b (Temperatur des Stahlbands nach Ablauf der verkürzten Preßzeit von t_{A}=18 msec) zu entnehmen ist, weist das Metallband unmittelbar nach Verlassen des Laminierspalts 3 (also zum Zeitpunkt t = t_{A}) eine Temperatur von ca. 268°C auf. Diese Temperatur des Metallbandes reicht aus, um durch Wärmeübergang den auflaminierten Kunststoffilm nach Ablauf der Preßzeit von seiner dem Metallband zugewandten Oberfläche bis zu seiner dem Metallband abgewandten Oberfläche, also über seine gesamte Dicke, aufzuschmelzen. Wie den Temperaturverläufen der Folie (Kurven 2b, 3b und 4b im Bereich t>t_{A}, Figur 4) zu entnehmen ist, steigt die Temperatur des Kunststoffilms nach Ablauf der Preßzeit (t>t_{A}) zumindest im Bereich der Folienmitte (Kurve 2b) als auch an der dem Stahlband abgewandten Oberfläche (Kurve 4b) an, so daß nach einer bestimmten Zeit (in Figur 4 bei ca. 24 msec) die Temperatur des Kunststoffilms auch an seiner dem Metallband abgewandten Oberfläche oberhalb der Schmelztemperatur ist. Die Kunststoffschicht ist damit über ihre gesamte Dicke aufgeschmolzen. Ist dieser Zustand erreicht, kann durch rasches Abkühlen des Kunststoffilms auf eine Temperatur unterhalb der Glasübergangstemperatur der amorphe Zustand des Kunststoffilms eingefroren werden, ohne daß hierzu eine externe Nacherwärmung des Laminats erforderlich ist.

Vergleichsversuche haben ergeben, daß die besten Eigenschaften der Kunststoffbeschichtung hinsichtlich Haftung am Metallband, Beständigkeit gegen Brüche beim Umformen und Oberflächenbeschaffenheit erzielt werden, wenn die Kunststoffschicht unmittelbar nach Verlassen des Laminierspalts von ihrer dem Metallband zugewandten Oberfläche bis etwa zur Hälfte ihrer Dicke aufgeschmolzen ist. Insbesondere hat sich gezeigt, daß bei Einhalten dieser Bedingungen die äußere Oberfläche der Kunststoffschicht gleichmäßig erscheint, wenn sie anschließend durch die Restwärme des Metallbandes komplett aufgeschmolzen und danach abgeschreckt wird. Sollte die Kunststoffschicht nach Verlassen des Laminierspalts 3 noch im schmelzflüssigen Zustand vorliegen, führt dies zu einer stumpfen und strukturierten Oberfläche, weil die Oberflächen der Laminierrollen 5, 6 ein Muster an die Oberfläche der Kunststoffschicht einprägen. Um zu erreichen, daß die Kunststoffschicht unmittelbar nach verlassen des Laminierspalts bis etwa zur Hälfte ihrer Dicke aufgeschmolzen ist, ist die Temperatur des Metallbandes nach Ablauf der Preßzeit bevorzugt mehr als 5° C über der Schmelztemperatur des Kunststoffs. Dies kann erreicht werden, wenn das Metallband vor Eintritt in den Laminierspalt eine Temperatur aufweist, welche um mindestens 10°C, bevorzugt zwischen 30°C und 50°C über der Schmelztemperatur des Kunststoffs liegt.

Bei der Kunststoffbeschichtung der Oberfläche des Metallbandes nach dem erfindungsgemäßen Verfahren ist die nach dem Stand der Technik erforderliche Nacherwärmung des Laminats auf Temperaturen oberhalb der Schmelztemperatur nicht notwendig. Es kann daher auf die sehr teuren Vorrichtungen zur Nacherwärmung, beispielsweise Induktionsöfen oder Infrarotstrahler, verzichtet werden. Ferner verringert sich die Verfahrensdauer, weil einerseits aufgrund der verkürzten Preßzeit mit höheren Bandgeschwindigkeiten gearbeitet werden kann und weil andererseits der Verfahrensschritt der Nacherwärmung wegfallen kann. Bei dem erfindungsgemäßen Verfahren tritt auch das Problem des Anhaftens des noch flüssigen Kunststoffilms an den Laminatorrollen 5 und 6 nicht auf, da die der Laminatorrolle 5, 6 zugewandte Oberfläche des Kunststoffilms während der Kontaktzeit mit der Laminatorrolle (Preßzeit) nicht aufgeschmolzen ist. Das Aufschmelzen des Kunststoffilms über seine gesamte Dicke bis hin zur Oberfläche, welche in Kontakt mit der Laminatorrolle steht, erfolgt vielmehr erst nach Verlassen des Laminierspalts 3 durch Abgabe der im Metallband M gespeicherten Wärme.

Das erfindungsgemäße Verfahren kann auch zur Beschichtung der Oberfläche eines Metallbandes mit einem Kunststoffilm mittels Direkt-Extrusion angewandt werden. Vorrichtungen zur Durchführung eines derartigen Beschichtungsverfahrens sind in der DE 197 30 893 C1 beschrieben.

Nach Auftragen des flüssigen Kunststoffilms auf das oberhalb der Schmelztemperatur des Kunststoffs erhitzte Metallband M kühlt sich die der Laminatorrolle 5, 6 zugewandte Oberfläche des Films bei Kontakt mit der gekühlten Laminatorrolle 5, 6 zunächst auf eine Temperatur unterhalb der Schmelztemperatur ab. Sobald dieser Zustand erreicht ist, kann der Kontakt zwischen Kunststoffilm und Laminatorrolle getrennt werden, ohne daß ein Teil des Kunststoffilms an der Laminatorrolle kleben bleibt. Nach der Kontakttrennung erwärmt sich der Kunststoffilm durch Abgabe der Wärme des Metallbandes M über seine gesamte Dicke auf Temperaturen oberhalb des Schmelzpunktes, sofern erfindungsgemäß die Temperatur des Metallbandes im Auftragsbereich nach Ablauf der Preßzeit noch größer als die Schmelztemperatur des aufgetragenen Kunststoffs ist.

Ist diese Bedingung erfüllt, wird der Kunststoffilm nach Ablauf der Preßzeit auf passive Weise durch Wärmeübergang vom Metallband auf die Kunststoffschicht über seine gesamte Dicke aufgeschmolzen. In diesem Zustand erfolgt dann in bekannter Weise das Einfrieren des amorphen Zustands der Kunststoffschicht durch Abschrecken auf Temperaturen unterhalb das Glasübergangspunktes. Um zu gewährleisten, daß der auflaminierte Kunststoffilm über seine gesamte Dicke durch die vom Metallband abgegebene Wärme aufgeschmolzen werden kann, die Temperatur der noch unbeschichteten Metallbandoberfläche und die Preßzeit so aufeinander abgestimmt sein, daß die Temperatur des Metallbandes im Bereich der auflaminierten Kunststoffolie nach Ablauf der Preßzeit noch oberhalb der Schmelztemperatur des Kunststoffs ist. Um ein Ankleben der Beschichtung an der Laminatorrolle 5, 6 zu verhindern, muß gleichzeitig die Temperatur der Kunststoffschicht an ihrer der Laminatorrolle zugewandten Seite unmittelbar nach Verlassen des Laminierspalts 3 unterhalb des Schmelzpunktes liegen.

## Patentansprüche

1. Verfahren zur Beschichtung der Oberfläche eines Metallbandes mit einem Kunststofffilm, wobei die noch unbeschichtete Metallbandoberfläche zunächst auf eine Temperatur T_{M} oberhalb der Schmelztemperatur des Kunststoffs erhitzt wird und der Kunststofffilm anschließend auf die Oberfläche auflaminiert wird, indem er über eine vorbestimmte Zeitdauer (Preßzeit) auf die Oberfläche gepreßt und das Laminat schließlich auf eine Temperatur unterhalb der Glasübergangstemperatur des Kunststoffs abgeschreckt wird, **dadurch gekennzeichnet, daß** das Metallband auf eine solche Temperatur erhitzt wird, daß unmittelbar nach Ablauf der Preßzeit die Temperatur des Metallbandes im Bereich des auflaminierten Kunststofffilms oberhalb der Schmelztemperatur des Kunststoffs ist und die Temperatur des auflaminierten Kunststofffilms an seiner dem Metallband zugewandten Oberfläche größer als die Schmelztemperatur und an seiner dem Metallband abgewandten Oberfläche kleiner als die Schmelztemperatur ist und der auf dem Metallband auflaminierte Kunststofffilm nach Ablauf der Preßzeit ohne weitere Erhitzung des Laminats durch die vom Metallband abgegebene Wärme von seiner dem Metallband zugewandten Oberfläche bis zu seiner dem Metallband abgewandten Oberfläche aufgeschmolzen wird und daß der Kunststofffilm auf eine Temperatur unterhalb der Glasübergangstemperatur abgeschreckt wird, sobald er über seine gesamte Dicke eine Temperatur oberhalb der Schmelztemperatur erreicht hat.

2. Verfahren nach Anspruch 1, **dadurch gekennzeichnet, daß** unmittelbar nach Ablauf der Preßzeit die Temperatur des Kunststofffilms an seiner dem Metallband zugewandten Oberfläche mehr als 5 °C über der Schmelztemperatur liegt.

3. Verfahren nach einem der Ansprüche 1 oder 2, **dadurch gekennzeichnet, daß** das Abschrecken durch Einleiten des beschichteten Metallbandes in ein Wasserbad auf Raumtemperatur erfolgt.

4. Verfahren nach einem der Ansprüche 1 bis 3, **dadurch gekennzeichnet, daß** unmittelbar nach Ablauf der Preßzeit der auf dem Metallband auflaminierte Kunststofffilm von seiner dem Metallband zugewandten Oberfläche bis etwa zur Hälfte seiner Dicke aufgeschmolzen ist.

5. Verfahren nach einem der Ansprüche 1 bis 4, **dadurch gekennzeichnet, daß** der Kunststofffilm an das Metallband angedrückt wird, indem das beschichtete Metallband durch einen Spalt zwischen zwei Rollen hindurchgeführt wird.

6. Verfahren nach Anspruch 5, **dadurch gekennzeichnet, daß** die an dem Kunststofffilm anliegende Rolle kühlbar ist und auf einer Temperatur unterhalb der Schmelztemperatur des Kunststoffs, vorzugsweise zwischen 20°C und 180°C, gehalten wird.

7. Verfahren nach einem der voranstehenden Ansprüche, **dadurch gekennzeichnet, daß** der Kunststofffilm vor dem Auflaminieren in Form einer kristallinen oder semikristallinen Kunststoffolie vorliegt.

8. Verfahren nach einem der Ansprüche 1 bis 7, **dadurch gekennzeichnet, daß** der Kunststofffilm als geschmolzener Kunststoff mittels Direkt-Extrusion auf das Metallband aufgebracht wird.

9. Verfahren nach einem der voranstehenden Ansprüche, **dadurch gekennzeichnet, daß** der Kunststofffilm nach dem Auflaminieren und Abschrecken nicht-kristalline, insbesondere amorphe Struktur aufweist.

10. Verfahren nach einem der voranstehenden Ansprüche, **dadurch gekennzeichnet, daß** die Temperatur T_{M} um mindestens 10°C, vorzugsweise zwischen 30°C und 50°C, über der Schmelztemperatur der Kunststoffolie liegt.

11. Verfahren nach einem der voranstehenden Ansprüche, **dadurch gekennzeichnet, daß** das Metallband in seiner Längsrichtung bewegt wird.

12. Verfahren nach einem der voranstehenden Ansprüche, **dadurch gekennzeichnet, daß** das Metallband beidseitig beschichtet wird.

13. Verwendung eines Laminats, hergestellt nach einem Verfahren gemäß einem der Ansprüche 1 bis 12, zur Herstellung eines Behälters, insbesondere einer Getränkedose.

## Claims

1. Method for coating the surface of a metal strip with a plastic film wherein the as yet uncoated surface of the metal strip is initially heated to a temperature T_{M} above the melting temperature of the plastic and then the plastic film is laminated on to the surface in that it is pressed on to the surface for a predetermined period of time (pressing time) and finally the laminate is chilled to a temperature below the glass transition temperature of the plastic, **characterised in that** the metal strip is heated to such a temperature that immediately after the end of the pressing time the temperature of the metal strip in the area of the laminated plastic film is above the melting temperature of the plastic and the temperature of the laminated plastic film on its surface facing the metal strip is higher than the melting temperature and on its surface remote from the metal strip is lower than the melting temperature, and after the end of the pressing time the plastic film laminated onto the metal strip is melted from its surface facing the metal strip to its surface remote from the metal strip by the heat given off by the metal strip without further heating of the laminate, and **in that** the plastic film is chilled to a temperature below the glass transition temperature as soon as it has reached a temperature above the melting temperature over its entire thickness.

2. Method according to claim 1, **characterised in that** immediately after the end of the pressing time the temperature of the plastic film at its surface facing the metal strip is more than 5°C above the melting temperature.

3. Method according to one of claims 1 or 2, **characterised in that** the chilling is carried out by introducing the coated metal strip into a water bath at room temperature.

4. Method according to one of claims 1 to 3, **characterised in that** immediately after the end of the pressing time the plastic film laminated on the metal strip is melted from its surface facing the metal strip to roughly half of its thickness.

5. Method according to one of claims 1 to 4, **characterised in that** the plastic film is pressed against the metal strip **in that** the coated metal strip is passed through a gap between two rollers.

6. Method according to claim 5, **characterised in that** the roller bearing on the plastic film can be cooled and is kept at a temperature below the melting temperature of the plastic, preferably between 20°C and 180°C.

7. Method according to one of the preceding claims, **characterised in that** before the lamination the plastic film is present in the form of a crystalline or semicrystalline plastic sheet.

8. Method according to one of claims 1 to 7, **characterised in that** the plastic film is applied as a melted plastic by means of direct extrusion on to the metal strip.

9. Method according to one of the preceding claims, **characterised in that** after lamination and chilling the plastic film exhibits a non-crystalline, in particular amorphous structure.

10. Method according to one of the preceding claims, **characterised in that** the temperature T_{M} lies at least 10°C, preferably between 30°C and 50°C, above the melting temperature of the plastic sheet.

11. Method according to one of the preceding claims, **characterised in that** the metal strip is moved in its longitudinal direction.

12. Method according to one of the preceding claims, **characterised in that** the metal strip is coated on both sides.

13. Use of a laminate manufactured by a method according to one of claims 1 to 12 for manufacturing a container, in particular a can for drinks.

## Revendications

1. Procédé pour revêtir la surface d'un ruban métallique à l'aide d'un film de matière plastique, dans lequel la surface du ruban métallique, non encore revêtue, est tout d'abord chauffée jusqu'à une température T_{M} supérieure à la température de fusion de la matière plastique, le film de matière plastique est ensuite laminé sur la surface, en étant pressé sur ladite surface pendant une période prédéterminée (temps de pressage), et le laminat est, pour finir, refroidi brusquement jusqu'à une température inférieure à la température de vitrification de la matière plastique, **caractérisé par le fait que** le ruban métallique est chauffé jusqu'à une température telle que, aussitôt après l'expiration du temps de pressage, la température dudit ruban métallique soit supérieure à la température de fusion de la matière plastique dans la région du film de matière plastique laminé ; que la température dudit film de matière plastique laminé soit supérieure à la température de fusion sur sa surface tournée vers le ruban métallique, et inférieure à ladite température de fusion sur sa surface tournée à l'opposé dudit ruban métallique ; et que le film de matière plastique laminé sur le ruban métallique amorce une fusion après expiration du temps de pressage depuis sa surface tournée vers le ruban métallique jusqu'à sa surface tournée à l'opposé dudit ruban métallique, sans chauffage supplémentaire du laminat, sous l'effet de la chaleur cédée par ledit ruban métallique ; et **par le fait que** le film de matière plastique est refroidi brusquement jusqu'à une température inférieure à la température de vitrification dès qu'il a atteint, sur toute son épaisseur, une température supérieure à la température de fusion.

2. Procédé selon la revendication 1, **caractérisé par le fait que**, aussitôt après l'expiration du temps de pressage, la température du film de matière plastique excède, de plus de 5°C, la température de fusion sur sa surface tournée vers le ruban métallique.

3. Procédé selon l'une des revendications 1 ou 2, **caractérisé par le fait que** le refroidissement brusque a lieu par introduction du ruban métallique, à l'état revêtu, dans un bain d'eau à température ambiante.

4. Procédé selon l'une des revendications 1 à 3, **caractérisé par le fait que**, aussitôt après l'expiration du temps de pressage, le film de matière plastique laminé sur le ruban métallique amorce une fusion depuis sa surface tournée vers ledit ruban métallique, jusqu'à environ la moitié de son épaisseur.

5. Procédé selon l'une des revendications 1 à 4, **caractérisé par le fait que** le film de matière plastique est pressé contre le ruban métallique en faisant défiler ledit ruban métallique, à l'état revêtu, à travers un interstice entre deux rouleaux.

6. Procédé selon la revendication 5, **caractérisé par le fait que** le rouleau appliqué contre le film de matière plastique peut être refroidi et est maintenu à une température inférieure à la température de fusion de la matière plastique, de préférence entre 20°C et 180°C.

7. Procédé selon l'une des revendications précédentes, **caractérisé par le fait que** le film de matière plastique se présente, préalablement à la stratification, comme un feuil de matière plastique cristallin ou semi-cristallin.

8. Procédé selon l'une des revendications 1 à 7, **caractérisé par le fait que** le film de matière plastique est déposé sur le ruban métallique par extrusion directe, en tant que matière plastique fondue.

9. Procédé selon l'une des revendications précédentes, **caractérisé par le fait que** le film de matière plastique présente, à l'issue de la stratification et du refroidissement brusque, une structure non cristalline et notamment amorphe.

10. Procédé selon l'une des revendications précédentes, **caractérisé par le fait que** la température T_{M} excède la température de fusion du feuil de matière plastique d'au moins 10°C, de préférence entre 30°C et 50°C.

11. Procédé selon l'une des revendications précédentes, **caractérisé par le fait que** le ruban métallique est mis en mouvement dans sa direction longitudinale.

12. Procédé selon l'une des revendications précédentes, **caractérisé par le fait que** le ruban métallique est revêtu des deux côtés.

13. Utilisation d'un laminat produit selon un procédé conforme à l'une des revendications 1 à 12, pour la fabrication d'un récipient, en particulier d'une cannette à boissons.
